# EUROPÄISCHE PATENTSCHRIFT

(11) **EP 0 648 536 B1**
(45) Veröffentlichungstag und Bekanntmachung des Hinweises auf die Patenterteilung: **18.09.1996**
(21) Anmeldenummer: 94202956.2
(22) Anmeldetag: 12.10.1994
(51) Int. Cl.: B01L 3/00, G01N 21/03

(54) **Mehrgefässanordnung zur Instrumental-Analyse**
Multiwell arrangement for use in instrumental analysis
Assemblage à cavités multiples pour l'analyse instrumentale

(30) Priorität: 18.10.1993 CH 3141/93
(43) Veröffentlichungstag der Anmeldung: 19.04.1995
(73) Patentinhaber: Schweizerische Eidgenossenschaft vertreten durch das AC-Laboratorium Spiez der Gruppe für Rüstungsdienste, CH-3700 Spiez (CH)
(72) Erfinder: Portmann, Rudolf, Dr., CH-3000 Bern 23 (CH); Hirschi, Andreas, CH-3800 Interlaken (CH); Wellenreiter, Andreas, CH-3812 Wilderswil (CH)
(74) Vertreter: Frauenknecht, Alois J.

(56) Entgegenhaltungen:
- EP-A- 0 571 661
- FR-A- 2 359 422
- GB-A- 2 177 200
- US-A- 3 432 275
- US-A- 4 431 307
- US-A- 4 741 619

## Beschreibung

Die vorliegende Erfindung bezieht sich auf eine Mehrgefässanordnung nach dem Oberbegriff des Patentanspruches sowie auf deren bevorzugte Verwendung.

Titerplatten, insbesondere Mikrotiterplatten werden in zunehmendem Masse bei der Instrumental-Analyse von Proben verwendet. Es hat sich dabei gezeigt, dass bei der Anwendung bekannter Verfahren mit photometrischen Auswertungen, wie beispielsweise ELISA-Tests (Enzyme-Linked Immunosorbent Assay) oder Enzymbestimmungen etc. diese oft durch einen auf der Oberfläche der meist wässrigen Proben gebildeten Meniskus gestört wird und dadurch die Resultate verfälscht werden.

Die Meniskusbildung resultiert bekanntlich durch Oberflächen- und Grenzflächenspannungen und kann je nach Benetzung der Flüssigkeit als konvexe oder konkave Oberfläche resultieren.

Es ist daher Aufgabe der Erfindung, eine Mehrgefässanordnung zu schaffen, welche einerseits störende Meniskusbildungen an der Oberfläche verhindert bzw. auf ein zulässiges Mass reduziert und andererseits die Strahlung bei einer Instrumental-Analyse nicht wesentlich absorbiert und/oder den Strahlengang beeinflusst. Zudem soll eine bevorzugte Verwendung der Anordnung aufgezeigt werden.

Diese Aufgabe wird nach den Merkmalen des Patentanspruches gelöst.

Durch den erfindungsgemässen Einsatz von Materialien unterschiedlicher physikalischer Eigenschaften wird somit eine Anordnung angestrebt, bei der die Gefässwände und die Gefässböden derart zusammengefügt sind, dass die zu analysierende Probe zur Gefässwand einen Randwinkel von zirka 90° aufweist. Die Gefässböden müssen zudem die für eine Auswertung geeigneten Eigenschaften aufweisen, damit sie von der eingesetzten Strahlungsquelle durchdringbar sind, ohne Reflektionen hervorzurufen, welche die Auswertung verfälschen.

Unter Anwendung des Erfindungsgedankens können anhand von Tabellen und Experimenten eine Vielzahl von geeigneten Materialkombinationen gefunden werden, welche sich in praxi empirisch optimieren lassen.

In abhängigen Ansprüchen sind bevorzugte Weiterbildungen des Erfindungsgegenstandes beschrieben.

Anspruch 2 berücksichtigt, dass die meisten Proben wässrig und damit polar sind.

Eine plattenartige Zusammenfassung gemäss Anspruch 3 erlaubt einerseits zweckmässige Auswertemethoden in einer Ebene (z.B. unter Verwendung von Koordinatentischen) und andererseits Verbindungen zwischen nicht oder nur mit Schwierigkeiten kleb- und schweissbaren Kunststoffen.

Besonders bewährt haben sich die unter dem Einsatz mechanischer Dehnungen zustandegekommenen kraftschlüssigen Verbindungen nach Anspruch 4. - Ebenso können gezielte Wärmedehnungen bei der Montage genutzt werden, um die angestrebten flüssigkeitsdichten Verbindungen zu erzielen.

Die in Anspruch 5 aufgeführten Thermoplaste haben sich insbesondere bei Proben mit polaren Lösungen als günstig erwiesen.

Durch beispielsweise radioaktive Bestrahlung lassen sich Oberflächen an Gefässwänden oder Böden gemäss Anspruch 6 erzeugen.

Es ist üblich, Mikrotiterplatten mit ca. 100 Gefässen (in praxi 96) einzusetzen, sodass die Proben voneinander unterscheidbar sein müssen, was entsprechend Anspruch 7 durch Farbmarkierungen an den Gefässen und/oder an Bestandteilen der Anordnung oder auf einem unverwechselbar aufsetzbaren Schutzdeckel möglich ist.

Es hat sich gezeigt, dass es herstellungstechnisch günstig ist, die Gefässe zu einzelnen Baugruppen zusammenzufassen, Anspruch 8.

Durch den Einsatz von Zentrierzapfen bzw. Distanzelementen nach Anspruch 9 lässt sich die Montage der Anordnung vereinfachen.

Die bevorzugte Verwendung nach Anspruch 10 ist auf lichtoptische Auswertungen mittels Videokameras gerichtet und erlaubt einen Betrieb in Transmission.

Nachfolgend werden anhand von Zeichnungen Ausführungsbeispiele des Erfindungsgegenstandes näher erläutert.

Es zeigen:
- Fig. 1: Eine Mikrotiterplatte, mit einem transparenten Schutzdeckel, in üblichen Abmessungen,
- Fig. 2: eine vereinfachte, vertikale Schnittdarstellung durch die Mikrotiterplatte Fig. 1, in der Längsachse, mit einem beispielsweise eingezeichneten Gefäss,
- Fig. 3: einen vergrössert dargestellten Teilschnitt durch die Mikrotiterplatte Fig. 1,
- Fig. 4: weitere Einzelheiten in einem Teilschnitt durch die Mikrotiterplatte Fig. 1, mit einem gefüllten Proben-Gefäss.

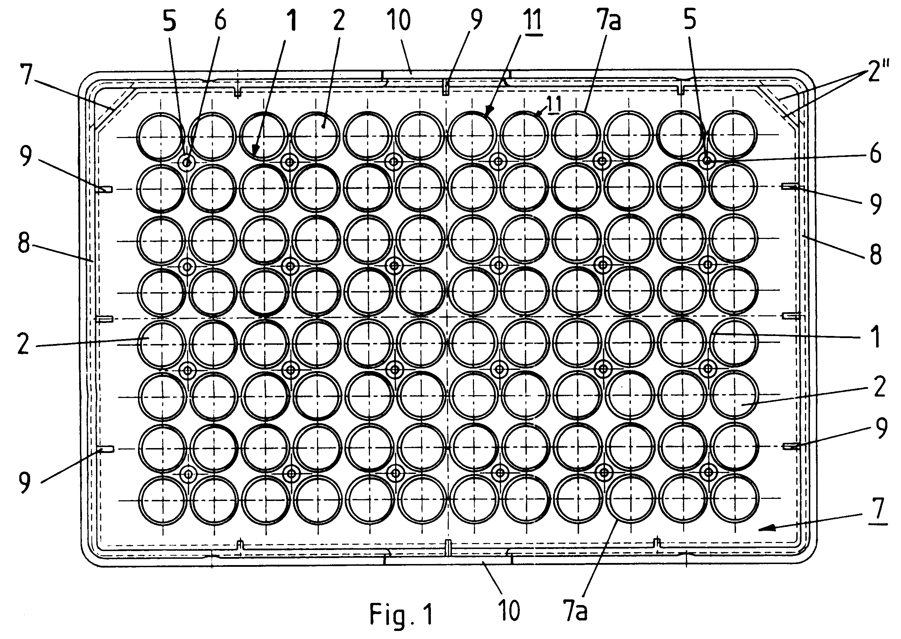

In Fig. 1 ist mit 1 eine Gefässwand bezeichnet. 96 Gefässböden 2 sind plattenartig angeordnet und bilden mit den Gefässwänden 1 die entsprechende Anzahl Gefässe 11.

Im weiteren sind Zentrierbohrungen 5 mit darin konzentrisch angeordneten Zentrierzapfen/Distanzelementen 6 und einer darüberliegenden Rasterhaube 7 mit Zentrierbohrungen 7a für die Gefässe 11 ersichtlich.

Im Innern der Rasterhaube 7 befinden sich zudem Verstärkungs- und Führungsstege 9; ausserhalb davon, einander gegenüberliegende Grifflächen 10 oberhalb eines Stützrandes 8.

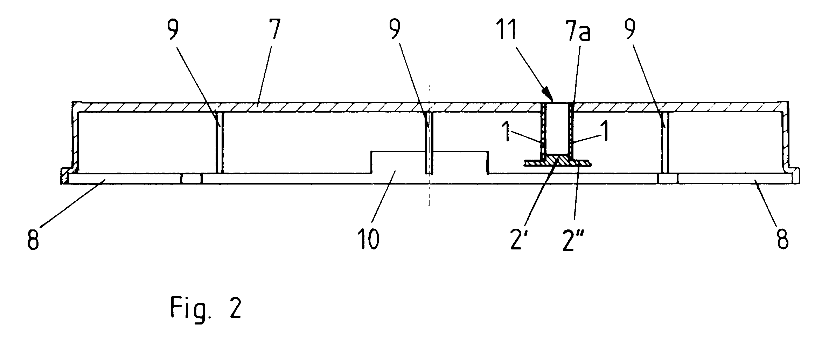

In Schnittdarstellung Fig. 2 ist die Rasterhaube 7 mit einem beispielsweise eingezeichneten und durch diese Haube 7 zentrierten Gefäss 11 dargestellt. Ebenfalls ist die Ausbildung des umlaufenden Stützrandes 8 zu sehen.

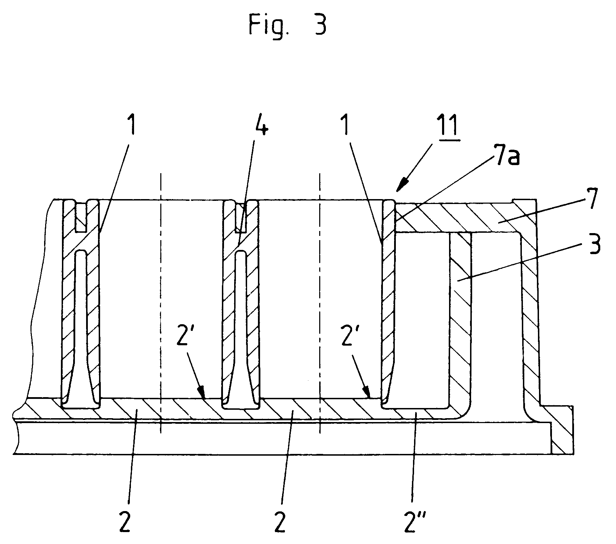

Es ist Fig. 2 zu entnehmen, dass die Gefässe 11 mit ihren Gefässwänden 1 unten auf einer Bodenplatte 2'' angeordnete Erhebungen 2', siehe Fig. 3, umschliessen und dass sie oben durch die Rasterhaube 7 durch die Bohrungen 7a, geführt und zentriert sind.

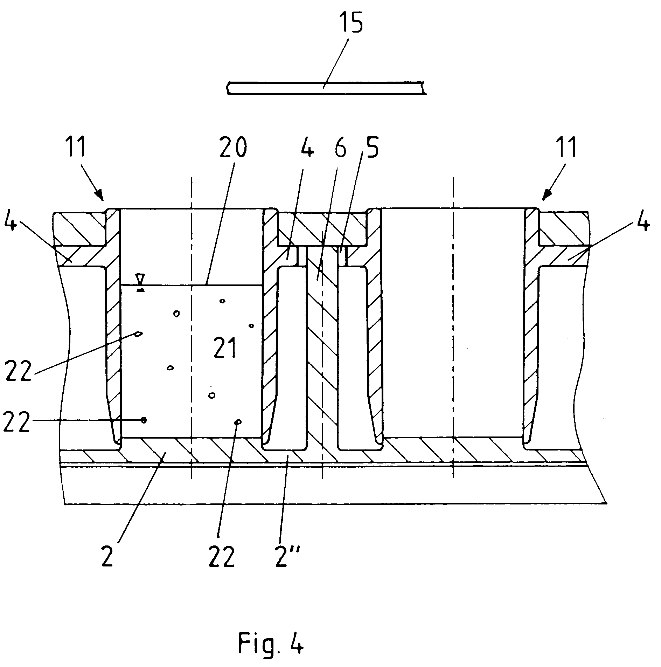

In den vergrösserten Darstellungen Fig. 3 und 4 lassen sich diese Einzelheiten nochmals erkennen.

In Fig. 3 ist die Ausgestaltung der zwischen den einzelnen Gefässen 11 vorhandenen Verbindungsstege 4 ersichtlich. Die Höhe der Gefässwände 1 ist so gewählt, dass sie unten nicht direkt auf der Bodenplatte 2'' aufliegen und oben nur geringfügig über die Rasterhaube 7 mit ihren Zentrierbohrungen 7a herausragen. Die Erhebungen 2' sind randseitig durch die Gefässwände 1 abgedichtet, wobei ersichtlich ist, dass deren Wandung aussen kegelförmig ausgeführt ist, um eine gewünschte zusätzliche Elastizität der unteren Endbereiche der Gefässe 11 zu erreichen.

Die Bodenplatte 2'' ist mit einem umlaufenden Rand versehen und bildet durch ihre Kastenform eine Halteschale 3. Diese dient gleichzeitig als Distanzelement zur Rasterhaube 7, siehe rechter Bereich von Fig. 3.

Bewährt haben sich zu Baugruppen zusammengefasste Gefässe 11, vorzugsweise deren 16, wobei diese jeweils im Zentrum durch eine Zentrierbohrung 5 im Verbindungssteg 4 mittels eines Zentrierzapfen/Distanzelements 6 bei der Montage geführt sind. Das Element 6 liegt bei einer einmal montierten Baugruppe frei in der Bohrung 5, wie aus Fig. 4 zu entnehmen ist; es dient gleichzeitig zur Distanzierung der Rasterhaube 7 von der Bodenplatte 2''.

Im weiteren ist aus Fig. 4 die planare Oberfläche 20 einer Proben-Flüssigkeit 21 mit beispielsweise eingezeichneten Organismen 22 ersichtlich.

Darüber befindet sich, schematisch dargestellt ein Schutzdeckel 15, der durch seine - hier nicht eingezeichneten Randbereiche - unverwechselbar auf die Oberfläche der Anordnung, Fig. 1 aufsetzbar ist.

Im vorliegenden Fall bestehen die Gefässwände 1 und damit die Gefässe 11 aus Polypropylen; die Gefässböden 2 mit ihren Erhebungen 2' aus transparentem Polystyrol. Die Rasterhaube 7 ist aus transparentem Polystyrol spritzgegossen.

Sämtliche Teile sind in an sich bekannter Druckgusstechnik gefertigt.

Bei der Montage der Gefässe empfiehlt es sich Spreizdorne zu verwenden, um die Gefässwände 1 problemlos über die Erhebungen 2' zu schieben.

Dies ergibt dichte Verbindungen, ohne den Einsatz von Klebstoffen oder von aufwendigen Schweissverfahren. Ausserdem lassen sich damit als "nichtverbindbar" bezeichnete Materialien zusammenfügen.

Die Erfindung hat sich vor allem mit transparenten Gefässböden für Videobetrachtungen und Auswertungen in Transmission bewährt, wobei die Videokamera vorzugsweise unterhalb der Gefässböden angeordnet ist; vgl. Fig. 1, wobei die Kamera betrachterseitig angeordnet ist. Die bei herkömmlichen Titerplatten auftretenden Schatten- und Kontrastprobleme sind mit dem Erfindungsgenstand vollständig eliminierbar.

Mikrotiterplatten mit den Abmessungen von 125 x 80 mm und einer Höhe von 15 mm mit 96 Gefässen mit 7 mm Innendurchmesser und einer Gesamttiefe von 9,5 mm haben sich in instrumentellen, auch automatisierten Prüfungen mit verschiedensten wässrigen Lösungen bewährt. Beispielsweise mit 405.0 mM NaCl + 18.9 mM MgSO₄*7H₂O + 16.4 mM MgCl₂*6H₂O + 7.3 mM CaCl₂*2H₂O + 1.59 mM NaHCO₃ + 6.65 mM KCl.

Untersuchungen, welche sterile Gefässe voraussetzen und daher einer Gamma-Strahlung unterzogen werden, wurden aus Polypropylen-Granulat Polypropylen BOREALIS VT 1064 KN; (Lieferant Fa. Borealis AG, Genf) gespritzt.

## Patentansprüche

1. Mehrgefässanordnung zur Instrumental-Analyse von wenigstens temporär flüssigen Proben, wobei wenigstens die Gefässböden aus einem transparenten Material bestehen und sich in einer Ebene befinden, dadurch gekennzeichnet, dass für die Gefässwände (1) und für die Gefässböden (2) Materialien unterschiedlicher physikalischer Eigenschaften vorgesehen sind, wobei das Material der Gefässwände (1) derart gewählt ist, dass abhängig von der zu analysierenden Probe die zwischen der Probe und der Gefässwand (1) resultierende Grenzflächenspannung eine zumindest annähernd planare Proben-Oberfläche (20) bildet, und dass der Gefässboden (1) aus einem für die Beobachtung und/oder Auswertung der Probe geeigneten Material gewählt ist.

2. Mehrgefässanordnung nach Anspruch 1, dadurch gekennzeichnet, dass die Gefässwände (1) aus einem apolaren Thermoplast bestehen, und dass zumindest die Gefässböden (2) aus einem transparenten Thermoplast sind.

3. Mehrgefässanordnung nach Anspruch 2, dadurch gekennzeichnet, dass die einzelnen Gefässböden (2) plattenartig zusammengefasst sind und als Erhebungen (2') ausgebildet sind.

4. Mehrgefässanordnung nach Anspruch 3, dadurch gekennzeichnet, dass die Gefässwände (1) kraftschlüssig und dicht die Erhebungen (2') umfassen und mit diesen einzelne Gefässe (11) bilden.

5. Mehrgefässanordnung nach Anspruch 2, dadurch gekennzeichnet, dass der Thermoplast der Gefässwände (1) ein Polyolefin oder ein Polytetrafluorethylen ist, und dass der Thermoplast der Gefässböden (2) aus einem Polystyrol oder aus einem Copolymer eines Polystyrols oder aus Polymethylmethacrylat oder Polycarbonat oder Polyethersulfon oder Polysulfon oder Polymethylpenten oder Styrolacrylnitril oder amorphem Polyamid oder aus einem Polyethylenterephthalat bestehen.

6. Mehrgefässanordnung nach Anspruch 1 oder 6, dadurch gekennzeichnet, dass die Gefässwände (1) und/oder Gefässböden (2) zumindest partiell eine die Proben adsorbierende Oberfläche aufweisen.

7. Mehrgefässanordnung nach Anspruch 4, dadurch gekennzeichnet, dass zwischen den Gefässen (11) vorgesehene Verbindungsstege (4) und/oder die Gefässe (11) und/oder ein auf die Gefässe (11) aufgelegter, gemeinsamer Schutzdeckel (15) Farbmarkierungen aufweisen, welche die Proben bezeichnen und diese voneinander unterscheiden lassen.

8. Mehrgefässanordnung nach Anspruch 4, dadurch gekennzeichnet, dass mindestens zwei Gefässe (11) zu einzelnen Baugruppen zusammengefasst sind.

9. Mehrgefässanordnung nach Anspruch 8, dadurch gekennzeichnet, dass die einzelnen Baugruppen über Zentrierbohrungen (5) an senkrecht zu den Gefässböden (2) stehenden Zentrierzapfen/Distanzelementen (6) geführt sind.

10. Verwendung der Mehrgefässanordnung nach einem der Ansprüche 1 bis 9 zur elektrooptischen Instrumental-Analyse.

## Claims

1. A multiwell arrangement for instrumental analysis of at least temporarily liquid samples, wherein at least the well bottoms consist of a transparent material and are situated in one plane, characterised in that materials of different physical properties are provided for the well walls (1) and for the well bottoms (2), wherein the material of the well walls (1) is chosen in such a manner that, depending on the sample to be analysed, the interfacial tension resulting between the sample and the well wall (1) forms at least approximately a planar sample surface (20), and the well bottom (1) is chosen from a material suitable for the observation and/or analysis of the sample.

2. A multiwell arrangement according to Claim 1, characterised in that the well walls (1) consist of an apolar thermoplastic, and at least the well bottoms (2) consist of a transparent thermoplastic.

3. A multiwell arrangement according to Claim 2, characterised in that the individual well bottoms (2) are combined in a plate-like manner and are in the form of elevations (2').

4. A multiwell arrangement according to Claim 3, characterised in that the well walls (1) surround the elevations (2') so as to form a non-positive and tight connection, and form individual wells (11) with the said elevations.

5. A multiwell arrangement according to Claim 2, characterised in that the thermoplastic of the well walls (1) is a polyolefine or a polytetrafluoroethylene, and the thermoplastic of the well bottoms (2) consists of a polystyrene, a polystyrene copolymer, polymethylmethacrylate, polycarbonate, polyethersulphone, polysulphone, polymethylpentene, styreneacrylonitrile, amorphous polyamide or a polyethyleneterephthalate.

6. A multiwell arrangement according to Claim 1 or 6, characterised in that the well walls (1) and/ or well bottoms (2) have at least a partial sample-adsorbing surface.

7. A multiwell arrangement according to Claim 4, characterised in that connecting webs (4) provided between the wells (11) and/ or the wells (11) and/ or a common protective cover (15) mounted on the wells (11) have colour markers which label the samples and enable the said probes to be distinguished from each other.

8. A multiwell arrangement according to Claim 4, characterised in that at least two wells (11) are combined to form individual sub-assembly units.

9. A multiwell arrangement according to Claim 8, characterised in that the individual sub-assemblies extend via spigot holes (5) on spigot shafts/ distance elements (6) which are positioned perpendicular to the well bottoms (2).

10. Use of the multiwell arrangement according to any one of Claims 1 to 9 for electro-optical instrumental analysis.

## Revendications

1. Dispositif à récipients multiples pour l'analyse instrumentale d'échantillons au moins temporairement liquides, dans lequel au moins les fonds de récipients sont constitués d'une matière transparente et se trouvent dans un plan, caractérisé par le fait que pour les parois de récipients (1) et pour les fonds de récipients (2) sont prévues des matières à propriétés physiques différentes, la matière des parois de récipients (1) étant choisie de façon telle qu'en fonction de l'échantillon à analyser, la tension d'interface entre l'échantillon et la paroi de récipient (1) forme une surface d'échantillon (20) au moins approximativement plane, et que le fond de récipient (1) est constitué d'une matière convenant à l'observation et/ou à l'évaluation de l'échantillon.

2. Dispositif à récipients multiples selon la revendication 1, caractérisé par le fait que les parois de récipients (1) sont constituées d'un matériau thermoplastique apolaire et qu'au moins les fonds de récipients (2) sont constitués d'un matériau thermoplastique transparent.

3. Dispositif à récipients multiples selon la revendication 2, caractérisé par le fait que les fonds de récipients individuels (2) sont réunis en plaque et constitués d'élévations (2').

4. Dispositif à récipients multiples selon la revendication 3, caractérisé par le fait que les parois de récipients (1) enserrent de manière étanche les élévations (2') et forment avec celles-ci des récipients individuels (11).

5. Dispositif à récipients multiples selon la revendication 2, caractérisé par le fait que le matériau thermoplastique des parois de récipients (1) est une polyoléfine ou un polytétrafluoro éthylène, et que le matériau thermoplastique des fonds de récipients (2) est un polystyrène ou un copolymère de polystyrène ou un polyméthacrylate de méthyle ou un polycarbonate ou un polyéthersulfone ou un polysulfone ou un polyméthylpentène ou un styrène/acrylonitrile ou un polyamide amorphe ou un polyéthylène téréphtalate.

6. Dispositif à récipients multiples selon l'une des revendications 1 ou 6, caractérisé par le fait que les parois de récipients (1) et/ou les fonds de récipients (2) présentent au moins partiellement une surface adsorbant les échantillons.

7. Dispositif à récipients multiples selon la revendication 4, caractérisé par le fait que des palmures de liaison (4) prévues entre les récipients (11) et/ou les récipients (11) et/ou un couvercle protecteur commun (15) posé sur les récipients (11) présentent des marques de couleurs qui désignent les échantillons et permettent de les différencier les uns des autres.

8. Dispositif à récipients multiples selon la revendication 4, caractérisé par le fait qu'au moins deux récipients (11) sont réunis en groupes.

9. Dispositif à récipients multiples selon la revendication 8, caractérisé par le fait que les différents groupes sont guidés par des trous de centrage (5) sur des doigts de centrage et éléments d'écartement verticaux (6) prévus sur les fonds de récipients (2).

10. Utilisation du dispositif à récipients multiples selon l'une des revendications 1 à 9 pour l'analyse instrumentale électro-optique.
